# EUROPEAN PATENT SPECIFICATION

(11) **EP 0 865 581 B1**
(45) Date of publication and mention of the grant of the patent: **23.04.2003**
(21) Application number: 96941300.4
(22) Date of filing: 05.12.1996
(51) Int. Cl.: F16D 65/02, B60T 13/38, F16J 15/32

(54) **DISC BRAKE DEVICE FOR MOTOR VEHICLES**
SCHEIBENBREMSVORRICHTUNG FÜR KRAFTFAHRZEUGE
DISPOSITIF POUR FREINS A DISQUES DE VEHICULES A MOTEUR

(30) Priority: 06.12.1995 SE 9504379
(43) Date of publication of application: 23.09.1998
(73) Proprietor: AB VOLVO, 405 08 Göteborg (SE)
(72) Inventor: ANGERFORS, Dan, S-448 31 Floda (SE); BAGGE, Lars, S-413 15 Göteborg (SE); BODIN, Jan-Olof, S-441 65 Alingsas (SE); TÖRNBERG, Rolf, S-416 72 Göteborg (SE)
(74) Representative: Andersson, Per Rune
(86) International application number: SE9601600
(87) International publication number: WO97021041

(56) References cited:
- DE-C- 4 212 382
- SE-A- 371 973
- DERWENT'S ABSTRACT, No. 85-288293/46, Week 8546; & SU,A,1 154 132 (KAMA LARGE CAR PROD), 7 May 1985.
- DERWENT'S ABSTRACT, No. 84-87066/14, Week 8414; & SU,A,1 024 329 (MINSK CAR WKS), 23 June 1983.

## Description

### TECHNICAL FIELD

The present invention refers to an arrangement for disc brakes for motor vehicles according to the preamble of the appended claim 1. An arrangement of this kind is known from DE-C-42 12 382.

### TECHNICAL BACKGROUND

Certain kinds of brake systems, for example brake systems for trucks, have decentrally placed, linear power actuators, which move back and forth, and which usually are pneumatic cylinders which, via a mechanical power transmission affect the lining units. Each pneumatic cylinder has a pressure bar which transfers its linear movement to a pendulous motion of a lever. The pressure bar extends through an inlet opening, which is bared when servicing the power actuator. It has been easy for polluting particles to fall down into the opening, and to land on sensitive parts, such as bearing surfaces, thus possibly causing a shortened life of the parts of the brake system or, in the worst case, a breakdown of the brakes.

Document SE 371973A discloses a pressure equalizing means for pneumatically operated brake cylinders for vehicles.

### SUMMARY OF THE INVENTION

The purpose of the present invention is to obtain a sealing means between the power actuator and the power transmission located in the brake caliper so that transmission of power is possible in an operational condition, while the inlet opening is kept closed when the power actuator is in a disassembled servicing condition.

The said purpose is obtained by means of the arrangement according to the invention, the characteristics of which are defined in the appended claim 1.

### THE FIGURES

The invention will, in the following, be described in more detail by means of an example of an embodiment with, reference to the appended drawings, where
- Fig. 1: with a partially opened general view shows a part of the brake system for the wheel of a vehicle,
- Fig. 2: shows a cross-section of the sealing means according to the invention, taken along the line II-II of Fig. 3,
- Fig. 3: shows a plane view of the sealing means,
- Fig. 4: in a larger scale mainly shows the open part of Fig. 1, from which can be seen the position and function of the sealing means in an operational condition, while
- Fig. 5: shows the sealing means and an interacting part of the power transmission in a servicing condition.

### PREFERRED EMBODIMENT:

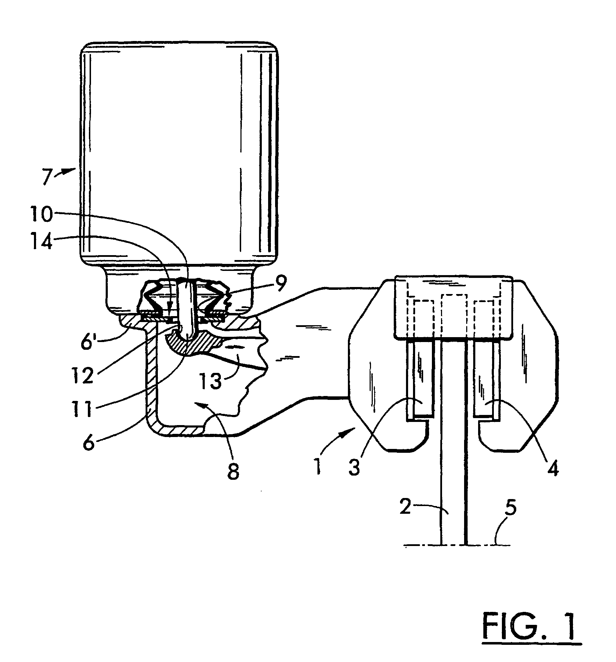

Fig. 1 shows a brake caliper 1 in a brake system for a motor vehicle, which, in a conventional way, straddles apart of the brake disc 2 which rotates with a wheel of the vehicle, and which, in a conventional manner, is braked by means of two brake lining units 3, 4, by means of a force which is applied to the outside of at least one of the brake lining units 3, so that this presses against the brake disc. The brake caliper 1 is usually of the so-called floating kind, in which the second brake lining unit 4, due to the axial movement of the brake caliper 1, i.e. in parallel with the axis of rotation of the brake disc 2, will also be pressed against the brake disc with an essentially equal pressure force as a result of the pressure of the first brake lining unit. The braking movement of the brake lining unit 3 is obtained in a conventional manner, by means of not shown brake pistons, which obtain their movement from a force actuator 7 arranged on an extended section 6 of the brake caliper via a power transmission mechanism 8 located in the brake caliper 1. The power actuator 7 for example consists of a pneumatically driven cylinder, which is detachably attached on a flange 6'. The power actuator has a pressure bar 10 which protrudes downwards into the power actuator through an opening 9. The pressure bar 10 is linearly adjustable between different degrees of protrusion through its opening 9. Its outer end 11 is preferably rounded, for example semi-spherical, and is in contact with a correspondingly rounded bowl 12 in a lever 13 which is part of the power transmission mechanism 8. The pressure bar 10 protrudes downwards through an opening 11 in the brake caliper 11 which faces the opening 9, and the opening is, in the operational condition shown in Fig. 1, at least partially closed by means of the sealing means 14 according to the invention.

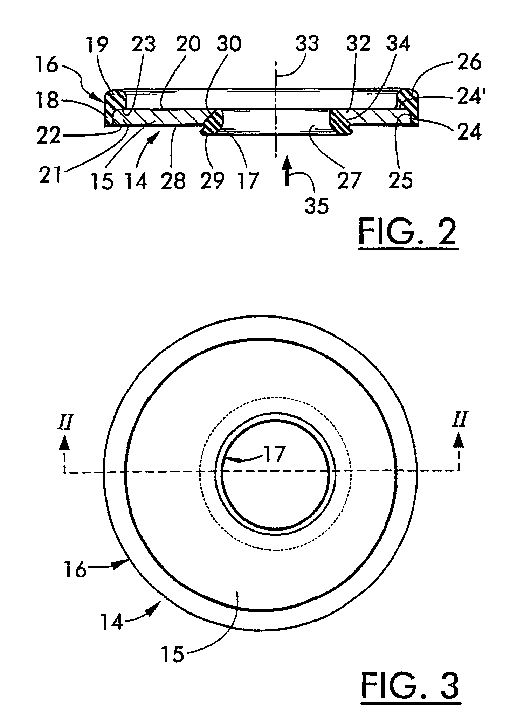

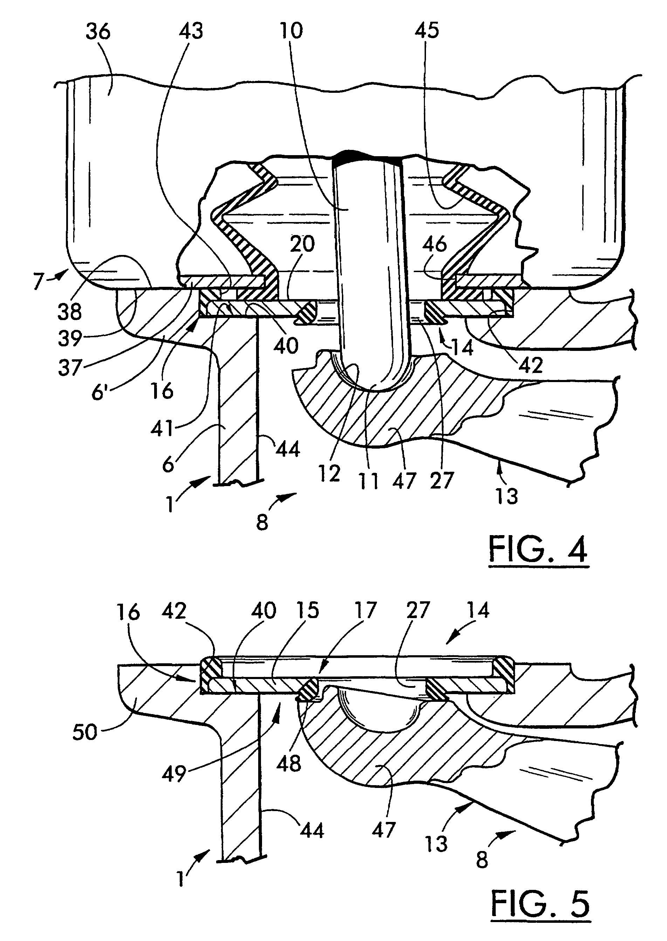

The construction of the sealing means 14 can best be seen in Figs. 2 and 3, and consists of a sealing ring with a supporting, relatively stiff, non-deformable, resilient disc-shaped part 15, which preferably is made of metal, for example steel-sheet, with a peripheral outer sealing part 16 and a peripheral inner sealing part 17. The two sealing parts 16, 17 are made in an elastically deformable material, such as rubber, plastic or the like, and are fixedly attached to the supporting part 15 by for example vulcanizing. The peripheral outer sealing part 16 extends with a part 18 radially outside of the supporting part and with one part 19 axially outside the one side 20 of the supporting part. In this way, the outer sealing part 16 obtains a crevasse which faces the outer perimeter 21 of the supporting part 15 with two contact surfaces 22, 23 against the supporting part, which contact surfaces are at an angle relative to each other. Since the peripheral part 21 of the supporting part 15 has an outwards facing, mainly cylinder-shaped surface 24, and a mainly plane surface 24' which constitutes a peripheral part of the side 20, a joining attachment between the peripheral outer sealing part 16 and the supporting part 15 is obtained, which attachment can absorb forces in different directions. The sealing surfaces of the sealing part 16 are formed by a mainly cylinder-shaped sealing surface 25, which in one direction becomes a rounded sealing surface 26 which protrudes up over the one side 20 of the supporting part 15.

The peripheral inner sealing part 17 forms a sealing lining of a through-going opening 27 in the sealing means. The opening 27 is, in the example shown, arranged eccentrically relative to the outer perimeter of the sealing means, but can of course also be arranged centrically, depending on the circumstances. The peripheral inner sealing part 17 protrudes from the supporting part 15 both radially inwards and axially from the peripheral outer sealing part 16, i.e. so that it protrudes from the side 28 which is opposite to the side 20 of the supporting part 15. For this purpose, the peripheral inner sealing part 17 has a sealing surface 29 which protrudes both inside of the radial inner edge 30 of the supporting part and axially from the side 28.

As can be seen in Fig. 2, the peripheral inner edge part 32 of the supporting part 15 is at an angle towards the longitudinal axis 33 of the opening 27, and is, in the example shown, conical, whereby the sealing part 17 has a correspondingly shaped conical contact surface 34 against the supporting part 15, thus insuring a high degree of support against forces on the sealing part 17 in the direction of the arrow 35, which will be described in more detail below.

The sealing surface 29 preferably has a well rounded convex contour shape.

The function of the sealing means in an operational condition, i.e. with the power actuator 7 arranged at the extended part of the brake caliper 6, can best be seen in Fig. 4. The power actuator 7, the casing 36 of which mainly consists of a cylinder, is with a mounting flange 37 fixedly attached to the flange 6', which has a plane mounting surface 38, which is intended to be in contact with a mounting surface 39 of the cylindrical casing 36 of the power actuator 7. Its flange 37, however, extends a distance radially inside the upwards facing mounting surface 38, which radially inwards becomes a mainly cylindrical recess 40 in the flange 6'. This recess 40 is adapted to hold the sealing means 14, and thus has a, mainly plane, contacting surface 41, and a radially inwards facing cylindrically-shaped supporting surface 42. The recess 40 is, in the example shown, circular and has a diameter which is slightly less than the outer diameter of the sealing means in a condition without load according to Fig. 2, whereby this sealingly can be fitted into the recess by elastically compressing the peripheral outer sealing part 16, or, to be more exact, the radially outwards facing surface 18 somewhat, in order to achieve good sealing against the supporting surface 42. The recess 40 further has a height which is well below the height of the sealing means 14 in a condition without load according to Fig. 2, whereby, in an assembled condition, the upwards protruding sealing surface 19 of the sealing part 16 is elasticly compressed according to Fig. 4 by the downwards facing surface 43 of the flange 6', which is integrated with the mounting surface 39.

In an assembled condition the sealing means is thus kept in place, and, with its peripheral outer sealing part 16 reassures the sealing of the inner space 44 of the caliper 1 against the surroundings. The power actuator 7 has a special sealing bellows 45 which, is so shaped as to, at its lower end be secured to the inner edge 46 of the flange 37, and is in sealing contact with the upwards facing side 20 of the sealing means 14. Thus, dual sealing effect of the inside of the power actuator 7 from the surroundings is obtained, due to the bellows 45 and the peripheral outer sealing parts 16 of the sealing means.

From Fig. 4 it can further be seen that the power actuator 7 protrudes with the pressure bar 10 downwards through the opening 27 so that this with its outer end 11 in the bowl 12 holds the lever 13 somewhat depressed at a distance from the sealing means 14. By means of a not shown counteracting force, the lever 13 is given a pre-tension with a torque in a direction clock-wise relative to that seen in Fig. 4, so that the lever with its shown end 47 strives to move upwards, whereby the end 47 will always accompany the linear movement back and forth of the pressure bar, which causes the braking effect.

Fig. 5 shows the sealing means 14 and the surrounding parts in a servicing condition, where the power actuator has been removed for servicing or replacement. The lever 13, due to its clock-wise torque, has moved a distance upwards to an end position, which is accomplished by means of a not shown stop, so that the sealing means 14 is not lifted upwards by the lever 13. In a servicing condition the sealing means thus remains in the recess 40, both because of its own weight and because of the friction of the peripheral outer sealing part 16 against the cylindrical supporting surface 42 of the recess. The sealing means 14 thus seals against the flange 6' of the brake caliper, whereby the supporting part 15 forms a sealing screening against the inner space 44 of the caliper, with the exception of the opening 27. This is however, closed by the peripheral inner sealing part 17 of the sealing means by interaction with the end 47 of the lever 13. The end 47 of the lever 13 for this purpose has a plane, upwards facing, ring-shaped, sealing surface 48 which, in the shown servicing condition, is pressed against the peripheral inner sealing part 17 and, to be more exact, against its axially directed sealing surface 31, which protrudes downwards outside of the side 28 of the supporting part 15 even in an elastically compressed condition, thus causing a very high degree of sealing without metallic contact between the lever 13 and the supporting part 15. From Fig. 5 it will be realized that the above described pressure force according to the arrow 35 is caused by the end 47 of the lever 13, for which reason the conical support surface 32 for the sealing part 17 contributes to absorb forces in the direction of the arrow 35, and thus decreases the skewing forces in the contact surface between the sealing part and the supporting part 15.

In a servicing condition a complete sealing of the inside of the brake caliper will be maintained without further special measures by using the sealing means according to the invention, whereby the sensitive parts in the inside of the brake caliper are protected against pollution, which can easily happen during service. When necessary, the sealing means 14 can easily be removed, whereby the opening 49 is bared and the inside 44 of the brake caliper is made accessible. The sealing means is thus also easy to replace. When assembling the power actuator 7 the opening 27 of the sealing means guides the pressure bar 10, so that it will come into a correct position in the bowl 12, and does not risk getting stuck at the side of one of the edges of the lever 13.

The invention is not limited to the above described, and in the drawings shown embodiments, but can be varied within the scope of the appended claims. For example, the outer and inner sealing parts 16, 17 can be shaped in various ways, while maintaining their main sealing function. For example, the conical support surface 32 can be shaped as a step corresponding to the peripheral edge section at the outer sealing part 16.

## Claims

1. Arrangement for disc brakes for motor vehicles, which comprise at least one brake lining unit (3, 4) supported by a brake caliper (1), the one side of which has a friction surface arranged to face a rotatable brake disc (2) where, in a braking condition for the vehicle, each brake lining unit is arranged to be moved to an active position by means of a power actuator (7) which affects its other side, and to be permitted to be returned to a returned, passive position, in which the power actuator (7) is attached to the outside of the brake caliper (1) and has a pressure bar (10) which is arranged to extend through an opening (49) in the brake caliper, and to interact with an inside of the opening located end (47) of a lever (13) which is part of a power transmission (8) between the power actuator (7) and said brake lining units (3,4), **characterized in that** a sealing means (14) which has a supporting, ring-shaped, surface covering part (15) of a non-deformable, resilient material with a through-going opening (27) which is arranged , in an operational condition of the power actuator (7), to form an inlet for the pressure bar (10), a peripheral, outer, ring-shaped sealing part (16) arranged to be in sealing contact with the edge-part of the opening (49), and a peripheral inner sealing part (17) which extends around said opening in the supporting part, and is arranged , in a servicing condition with the power actuator (7) removed, to be in contact with a contacting surface (48) of said end (47) of the lever (13), which thus closes said opening (27) in the sealing means (14).

2. Arrangement according to claim 1,
**characterized in that** the sealing means (14) is mainly disc-shaped, with two, mainly plane, side surfaces (20, 28) and **in that** the peripheral inner sealing part (17) protrudes with a sealing surface (29) axially from the one side (28).

3. Arrangement according to claim 1,
**characterized in that** the peripheral outer sealing part (16) extends with a sealing surface (25) radially outside the edge-part (21) of the supporting part (15).

4. Arrangement according to claim 3,
**characterized in that** the peripheral outer sealing part (16) protrudes with a second sealing surface (26) axially outside said second side (20).

5. Arrangement according to claim 4,
**characterized in that** said sealing parts (16, 17) are fixedly attached to the supporting part (15) by means of contact surfaces (24', 32) which are at an angle relative to the axis (33) of symmetry of the opening (27) and thus form support for said sealing parts in case of load in said axial direction.

## Patentansprüche

1. Anordnung für Scheibenbremsen für Kraftfahrzeuge, die wenigstens eine Bremsbelagseinheit (3, 4) aufweist, welche von einem Bremssattel (1) gehalten ist, wobei eine Seite der Bremsbelageinheit eine Reibfläche besitzt, die auf eine drehbare Bremsscheibe (2) weisend angeordnet ist, wobei bei einem Bremszustand für das Fahrzeug jede Bremsbelagseinheit in eine aktive Stellung mittels einer mechanischen Betätigungseinrichtung (7) bewegbar ist, die auf dessen andere Seite einwirkt, und die in eine zurückgezogene passive Stellung zurückziehbar ist, wobei die mechanische Betätigungseinheit (7) an der Außenseite des Bremssattels (1) angebracht ist und einen Druckstößel (10) aufweist, der sich durch eine Öffnung (49) in den Bremssattelerstreckend und zur wechselseitigen Wirkung mit einer Innenseite des offen angeordneten Endes (47) eines Hebels (13) vorgesehen ist, welcher ein Teil einer Kraftübertragung (8) zwischen der mechanischen Betätigungseinrichtung (7) und der Bremsbelagseinheit (3, 4) bildet, **dadurch gekennzeichnet, dass** eine Dichtungseinrichtung (14) vorgesehen ist, die einen haltenden ringförmigen Oberflächen abdeckenden Abschnitt (15) eines nicht verformbaren elastischen Materials mit einer Durchgangsöffnung (27), welche im Betriebszustand der mechanischen Betätigungseinrichtung (7) zur Bildung eines Einlasses für den Druckstößel (10) vorgesehen ist, einen umgebenden äußeren ringförmigen Dichtungsabschnitt (16), der im dichtenden Kontakt mit dem Randabschnitt der Öffnung (49) vorgesehen ist, und einen umgebenden inneren Dichtungsabschnitt (17) aufweist, der sich um die Öffnung in dem haltenden Abschnitt erstreckt und der in einem Wartungszustand bei entfernter mechanischer Betätigungseinrichtung (7) für einen Kontakt mit einer Berührungsfläche (48) des Endes (47) des Hebels (13) vorgesehen ist, die auf diese Weise die Öffnung (57) in der Dichtungseinrichtung (14) schließt.

2. Anordnung nach Anspruch 1, **dadurch gekennzeichnet, dass** die Dichtungseinrichtung (14) überwiegend scheibenförmig mit zwei hauptsächlich ebenen Seitenflächen (20, 28) ausgebildet ist, und dass der umgebende innere Dichtungsabschnitt (17) mit einer Dichtfläche (29) axial von einer Seite (28) vorsteht.

3. Anordnung nach Anspruch 1, **dadurch gekennzeichnet, dass** der umgebende äußere Dichtungsabschnitt (16) sich mit einer Dichtfläche (25) radial außerhalb des Randabschnitts (21) des Halteabschnitts (15) erstreckt.

4. Anordnung nach Anspruch 3, **dadurch gekennzeichnet, dass** der umgebende äußere Dichtungsabschnitt (16) mit einer zweiten Dichtfläche (26) axial nach außen von der zweiten Seite (20) vorsteht.

5. Anordnung nach Anspruch 4, **dadurch gekennzeichnet, dass** die Dichtungsabschnitte (16, 17) fest an dem Halteabschnitt (15) mittels Kontaktflächen (24, 32) angebracht sind, die unter einem Winkel bezogen auf die Symmetrieachse (31) der Öffnung (27) angeordnet sind und demgemäß eine Abstützung für die Dichtungsabschnitte für den Fall einer Belastung in axialer Richtung bilden.

## Revendications

1. Agencement pour freins à disque de véhicules à moteur, qui comporte au moins une unité de garniture de frein (3, 4) supportée par un étrier de frein (1), dont le premier côté a une surface de friction agencée pour être en vis-à-vis d'un disque de frein pouvant tourner (2) où, dans un état de freinage du véhicule, chaque unité de garniture de frein est agencée pour être déplacée vers une position active par l'intermédiaire d'un actionneur mécanique (7) qui affecte son autre côté, et pour pouvoir être ramenée vers une position passive, rappelée, dans lequel l'actionneur mécanique (7) est relié à l'extérieur de l'étrier de frein (1) et a une barre d'appui (10) qui est agencée pour s'étendre à travers une ouverture (49) de l'étrier de frein, et pour interagir avec une partie intérieure de l'ouverture située à l'extrémité (47) d'un levier (13) qui est une partie de la transmission mécanique (8) entre l'actionneur mécanique (7) et lesdites unités de garniture de frein (3, 4), **caractérisé en ce que** de moyens d'étanchéité (14) qui ont une partie de recouvrement de surface, de support, en forme d'anneau, constituée d'un matériau élastique, non-déformable, ayant une ouverture traversante (27) qui est agencée, dans l'état fonctionnel de l'actionneur mécanique (7) pour former une entrée pour la barre d'appui (10), une partie d'étanchéité périphérique extérieure en forme d'anneau (16) agencée pour être en contact étanche avec la partie de bord de l'ouverture (49), et une partie d'étanchéité périphérique intérieure (17) qui s'étend autour de ladite ouverture dans la partie de support, et est agencée dans un état d'entretien ayant l'actionneur mécanique (7) enlevé, pour être en contact avec une surface de contact (48) de ladite extrémité (47) du levier (13), qui ferme ainsi ladite ouverture (27) des moyens d'étanchéité (14).

2. Agencement selon la revendication 1,
**caractérisé en ce que** les moyens d'étanchéité (14) ont principalement une forme de disque ayant deux surfaces latérales principalement planes (20, 28) et **en ce que** la partie d'étanchéité périphérique intérieure (17) fait saillie, à l'aide d'une surface d'étanchéité (29), axialement à partir du premier côté (28).

3. Agencement selon la revendication 1,
**caractérisé en ce que** la partie d'étanchéité périphérique extérieure (16) s'étend à l'aide d'une surface d'étanchéité (25) radialement à l'extérieur de la partie de bord (21) de la partie de support (15).

4. Agencement selon la revendication 3,
**caractérisé en ce que** la partie d'étanchéité périphérique extérieure (16) fait saillie à l'aide d'une seconde surface d'étanchéité (26) axialement vers l'extérieur dudit second côté (20).

5. Agencement selon la revendication 4,
**caractérisé en ce que** lesdites parties d'étanchéité (16, 17) sont reliées de manière fixe à la partie de support (15) par l'intermédiaire de surfaces de contact (24, 32) qui forment un angle par rapport à l'axe (33) de symétrie de l'ouverture (27) et forment ainsi un support pour lesdites parties d'étanchéité dans le cas d'une charge dans ladite direction axiale.
